# EUROPÄISCHE PATENTSCHRIFT

(11) **EP 3 914 488 B1**
(45) Veröffentlichungstag und Bekanntmachung des Hinweises auf die Patenterteilung: **22.02.2023**
(21) Anmeldenummer: 19832892.4
(22) Anmeldetag: 18.12.2019
(51) Int. Cl.: B60T 13/66, B60T 17/22

(54) **VERFAHREN ZUM BETREIBEN EINER BREMSANLAGE UND BREMSANLAGE**
OPERATING METHOD OF A BRAKE SYSTEM AND BRAKE SYSTEM
PROCÉDÉ D'OPERATION D'UN SYSTÈME DE FREINAGE ET UN TEL SYSTÈME DE FREINAGE

(30) Priorität: 23.01.2019 DE 102019200807
(43) Veröffentlichungstag der Anmeldung: 01.12.2021
(73) Patentinhaber: Continental Automotive Technologies GmbH, 30165 Hannover (DE)
(72) Erfinder: BRENN, Martin, 60488 Frankfurt am Main (DE); ULLRICH, Thorsten, 60488 Frankfurt am Main (DE)
(74) Vertreter: Continental Corporation
(86) Internationale Anmeldenummer: PCT/EP2019/085915
(87) Internationale Veröffentlichungsnummer: WO 2020/151884

(56) Entgegenhaltungen:
- WO-A1-2005/014352
- WO-A1-2019/105748
- DE-A1- 10 147 181
- DE-A1-102017 222 789

## Beschreibung

Die Erfindung betrifft ein Verfahren zum Betreiben einer Bremsanlage mit hydraulisch betätigbaren Radbremsen, welche eine elektrisch steuerbare Druckbereitstellungseinrichtung, die mit den Radbremsen trennbar verbunden ist, einen mittels eines Bremspedals betätigbaren Hauptbremszylinder, welcher mit den Radbremsen trennbar verbunden ist, und einen Bremsflüssigkeitsbehälter mit einer ersten und wenigstens einer zweiten Behälterkammer, welche durch eine erste Schottwand getrennt sind, umfasst, wobei die erste Behälterkammer mit der Druckbereitstellungseinrichtung über einen ersten Anschluss zur Flüssigkeitsentnahme verbunden ist, über den die Druckbereitstellungseinrichtung mit Druckmittel versorgt wird, und die wenigstens eine zweite Behälterkammer mit dem Hauptbremszylinder über wenigstens einen zweiten Anschluss zur Flüssigkeitsentnahme verbunden ist, über den der Hauptbremszylinder mit Druckmittel versorgt wird, wobei mittels wenigstens eines Bremsflüssigkeitssensors ein erster und ein zweiter Füllstandpegel in dem Bremsflüssigkeitsbehälter ermittelt werden, wobei der zweite Füllstandpegel niedriger ist als der erste Füllstandpegel, wobei die Bremsanlage bei Erreichen des ersten Füllstandpegels in einem ersten Betriebsmodus betrieben wird und bei Erreichen des zweiten Füllstandpegels in einem zweiten Betriebsmodus betrieben wird. Sie betrifft weiterhin eine Bremsanlage.

Aus der WO 2005/014352 A1 ist eine Bremsanlage bekannt, welche einen mittels eines Bremspedals betätigbaren Bremsdruckgeber, einen Druckmittelvorratsbehälter und mindestens eine elektrohydraulische Druckquelle umfasst. Der Druckmittelvorratsbehälter umfasst eine erste und eine zweite Kammer, wobei die Druckquelle an die erste Kammer angeschlossen ist und der Bremsdruckgeber an die zweite Kammer. Durch die Trennung des Bremsdruckgebers und der Druckquelle soll während einer "Brake-by-Wire"-Betriebsart ein komfortables Pedalgefühl vermittelt werden. Es sind Mittel zur Ermittlung des Druckmittelniveaus in der ersten und zweiten Kammer vorgesehen.

In der DE 101 47 181 A1 ist eine Füllstandsmessvorrichtung für einen Druckmittelvorratsbehälter beschrieben.

In bekannten Bremsanlagen werden Bremsflüssigkeitsschalter dazu genutzt, dass der Fahrer über den Verlust von Bremsflüssigkeit informiert wird.

Innerhalb einer Brake-by-Wire-Bremsanlage können prinzipiell Leckagen in folgenden Regionen auftreten:
- Aktor-Teil: Refill-Kammer, linearer Aktor und dazwischenliegende Verbindungen
- TMC-Teil - Primärer Kreis: Primäre Kammer des Reservoirs, Leckagen am Tandemhauptbremszylinder (TMC) selbst
- TMC-Teil - Sekundärer Kreis: Sekundäre Kammer des Reservoirs, Simulator
- eines der Vorderräder
- eines der Hinterräder

In bekannten Brake-by-Wire-Systemen wird der Bremsflüssigkeitsschalter genutzt um festzustellen, ob der interne Aktor ausreichend Bremsflüssigkeit zur Verfügung hat. Ist unzureichend Flüssigkeit vorhanden und das Brake-by-Wire-System würde nachsaugen, so wird das Bremsensystem mit Luft kontaminiert, was im Prinzip dem Ausfall der Bremsanlage gleichkommt. Hierzu wird der Schalter genutzt, um vom By-Wire-Betrieb auf die hydraulische Rückfallebene zurückzugreifen.

Durch Einbau einer zweiten Stufe oberhalb der Schottwand, kann der Fahrer frühzeitig über Bremsflüssigkeitsverluste gewarnt werden.

Der bekannte Stand der Technik hat den Nachteil, dass im Falle einer Leckage im Rad das Bremsensystem in eine einkreisige, nicht-verstärkte, hydraulische Rückfallebene fallen wird. Durch die Elektrifizierung der Fahrzeuge und damit immer größere Fahrzeugmasse ergeben Systemauslegungs-Rechnungen, dass im Falle eines einkreisigen Ausfalls der Fahrer entweder nicht die notwendige Verzögerung oder nicht das benötigte Volumen aus dem Tandemhauptbremszylinder aufbringen kann. Dies führt dazu, dass das Bremsensystem in seiner jetzigen Art und Weise nicht für diese Fahrzeuge geeignet sind.

Im Regelfall wird auf Grund der großen Volumenaufnahme die Anforderung der Volumenreserve innerhalb des TMCs bei gegebener Verzögerung von 2,44 m/s² bei einkreisigem Ausfall nicht erfüllt.

Akzeptable Degradationen sind beispielsweise:
- Zweikreisige, hydraulische Rückfallebene ohne Systemverstärkung
- Einkreisiger Betrieb mit Systemverstärkung (hier sind zwei Räder über die Einlass-Ventile abgeklemmt, während das Volumen und der Druck vom Systemaktuator erzeugt wird).
- Betrieb einer Diagonale
- Nur Vorderräder (Schwarz/Weiß - Aufteilung)
- Nur Hinterräder

Eine inakzeptable Degradation ist beispielsweise eine einkreisige, hydraulische Rückfallebene ohne Systemverstärkung.

Der Erfindung liegt daher die Aufgabe zugrunde, ein Verfahren für eine verbesserte Degradation bereitzustellen. Weiterhin soll eine entsprechende Bremsanlage bereitgestellt werden.

In Bezug auf das Verfahren wird diese Aufgabe erfindungsgemäß dadurch gelöst, dass wenigstens ein weiterer Füllstandpegel, der niedriger als der erste und zweite Füllstandpegel liegt, mittels des Bremsflüssigkeitssensors überwacht wird, und wobei die Bremsanlage nur in eine hydraulische Rückfallebene geschaltet wird, wenn der niedrigste überwachte Füllstandpegel erreicht wird.

Vorteilhafte Ausgestaltungen der Erfindung sind Gegenstand der Unteransprüche.

Die Erfindung geht von der Überlegung aus, dass der Betrieb einer Brake-by-Wire-Bremsanlage in der hydraulischen Rückfallebene möglichst vermieden werden sollte. Es wäre daher vorteilhaft, sicher bestimmen zu können, ob bei einer detektierten Leckage zumindest in zwei Radbremsen der Bremsanlage noch aktiv mittels der Druckbereitstellungseinrichtung Radbremsdruck zuverlässig aufgebaut werden kann.

Wie nunmehr erkannt wurde, kann durch die Nutzung eines drei-stufigen Bremsflüssigkeitssensors und einem veränderten Degradationskonzepts die Degradationsstufe der einkreisigen, hydraulischen Rückfallebene ohne Systemverstärkung verhindert werden. Dazu wird eine dritte Schaltschwelle unterhalb der Schottwand innerhalb des Reservoirs eingefügt.

Als hydraulische Rückfallebene wird hierbei ein Betriebsmodus der Bremsanlage verstanden, in dem nicht mittels der Druckbereitstellungseinrichtung in den Radbremsen Druck aufgebaut wird.

Vorteilhafterweise ist der wenigstens eine weitere Füllstandpegel ein dritter Füllstandpegel, wobei der erste Füllstandpegel über einer Schottwand im Bremsflüssigkeitsbehälter liegt, und wobei der zweite und der dritte Füllstandpegel unterhalb einer Schottwand im Bremsflüssigkeitsbehälter liegen.

In einer bevorzugten Ausführungsform werden als weitere Füllpegel ein dritter und ein nullter Füllstandpegel ermittelt, wobei der dritte Füllstandpegel niedriger ist als er erste und der zweite Füllstandpegel und wobei der nullte Füllstandpegel höher ist als der erste Füllstandpegel.

Vorteilhafterweise liegt der zweite Füllstandpegel über einer Schottwand im Bremsflüssigkeitsbehälter.

Bei Erreichen des nullten Füllstandpegels wird vorzugsweise eine Warnung ausgegeben. Diese Warnung kann in dem Aufleuchten einer, insbesondere roten, Warnlampe erfolgen. Sie kann auch zusätzlich oder alternativ akustisch erfolgen.

Bevorzugt wird mittels eines Sensors die Hanglage des Bremsflüssigkeitsbehälters ermittelt, wobei die Warnung unterdrückt wird, wenn die ermittelte Hanglage größer ist als ein vorgegebener Hanglagenschwellenwert. Auf diese Weise können Fehlalarme vermieden werden, die von einem Absinken des Pegelstandes resultieren, der von einer Hanglage des Fahrzeugs resultiert.

Vorteilhafterweise wird in dem ersten Betriebsmodus in den Radbremsen einer Achse mittels der Druckbereitstellungseinrichtung aktiv Radbremsdruck aufgebaut, wobei in dem zweiten Betriebsmodus in den Radbremsen der anderen Achse mittels der Druckbereitstellungseinrichtung aktiv Radbremsdruck aufgebaut wird.

In dem ersten und zweiten Betriebsmodus wird vorteilhafterweise der Hauptbremszylinder hydraulisch von den Radbremsen getrennt.

Bevorzugt wird in dem ersten Betriebsmodus in den Vorderradbremsen und im zweiten Betriebsmodus in den Hinterradbremsen aktiv Radbremsdruck aufgebaut.

In der hydraulischen Rückfallebene wird vorteilhafterweise die Druckbereitstellungseinrichtung von den Radbremsen getrennt und der Hauptbremszylinder mit den Radbremsen verbunden, so dass Bremsdruck in den Radbremsen durch den Hauptbremszylinder bereitgestellt wird.

Bevorzugt wird der jeweilige Füllstandpegel in der Kammer des Bremsflüssigkeitsbehälters gemessen, die hydraulisch der

Druckbereitstellungseinrichtung zugeordnet ist.

Der oberste ermittelte Füllstandpegel ist bevorzugt oberhalb der Schottwand angeordnet.

In Bezug auf die Bremsanlage wird die oben genannte Aufgabe erfindungsgemäß gelöst mit einer Steuer- und Regeleinheit zur Durchführung eines oben beschriebenen Verfahrens.

Der Bremsflüssigkeitsbehälter der Bremsanlage umfasst bevorzugt drei Kammern, von denen die erste Kammer hydraulisch der Druckbereitstellungseinrichtung zugeordnet ist und wobei die anderen zwei Kammern jeweils hydraulisch dem zweiten Bremskreis und dem ersten Bremskreis zugeordnet sind, und wobei benachbarte Kammern durch Schottwände voneinander getrennt sind, und wobei die Schottwände die gleiche Höhe aufweisen.

Die Vorteile der Erfindung liegen insbesondere darin, dass statt eines teureren, gestuften TMCs, welcher den Volumenhaushalt bei kleinem TMC-Durchmesser erhalten kann, dieses elektronische System in Kombination mit einem drei-stufigen Sensor günstigere TMC-Lösungen unterstützen kann.

Ein Ausführungsbeispiel der Erfindung wird anhand einer Zeichnung näher erläutert. Darin zeigen in stark schematischer Darstellung:
- FIG. 1: ein Ablaufdiagramm von Ereignissen im Falle einer Leckage aus dem Stand der Technik;
- FIG. 2: eine Bremsanlage aus dem Stand der Technik;
- FIG. 3: einen Tandemhauptbremszylinder in zwei hydraulischen Zuständen ohne und mit Leckage;
- FIG. 4: einen Bremsflüssigkeitsbehälter;
- FIG. 5: ein Ablaufdiagramm eines Verfahrens in einer ersten bevorzugten Ausführungsform; und
- FIG. 6: ein Ablaufdiagramm eines Verfahrens in einer zweiten bevorzugten Ausführungsform;

Gleiche Teile sind in allen Figuren mit denselben Bezugszeichen versehen.

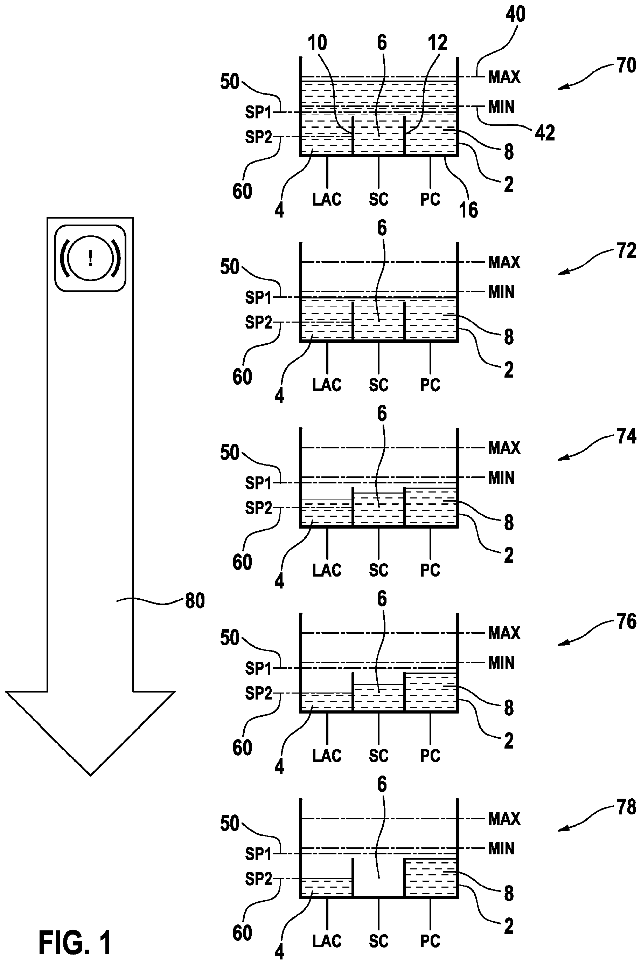

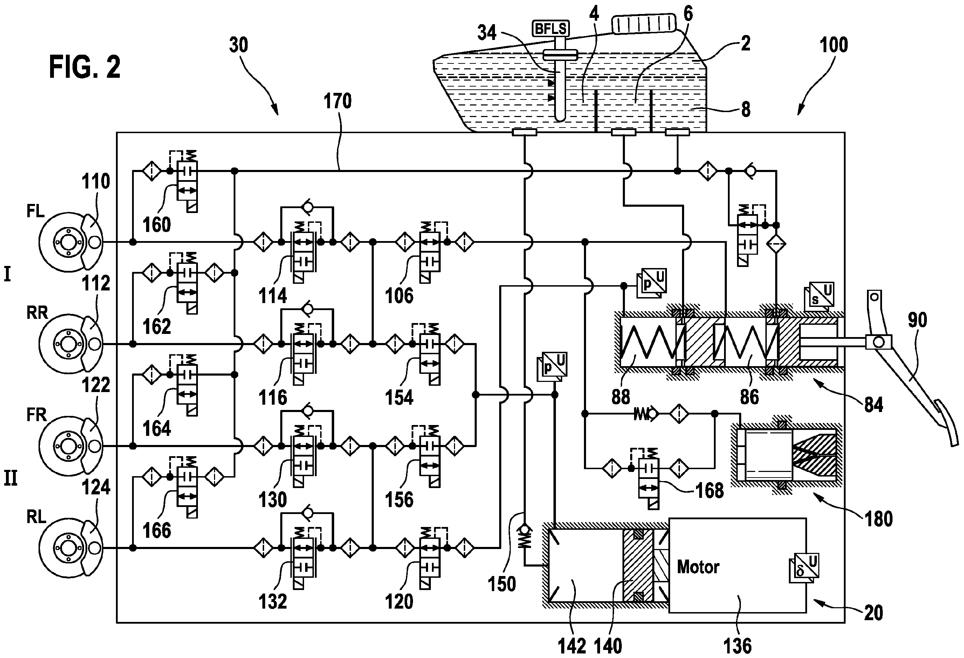

In FIG. 1 ist ein Ablaufdiagramm dargestellt für einen Bremsmittelbehälter 2 mit einer ersten Kammer 4, einer zweiten Kammer 6 und einer dritten Kammer 8. Die erste Kammer 4 ist einer Druckbereitstellungseinrichtung 20 eines Bremssystems 30 zugeordnet (siehe FIG. 2). Die zweite Kammer 6 ist dem Sekundärkreis II zugeordnet, die dritte Kammer 8 ist dem Primärkreis I zugeordnet.

Die beiden Kammern 4 und 6 sind durch eine Schottwand 10 voneinander getrennt. Kammern 6 und 8 sind durch eine Schottwand 12 voneinander getrennt. Die Schottwände 10 und 12 sind gleich hoch, d. h. sie weisen eine gleiche Höhe über dem Behälterboden 16 auf.

Ein zweistufiger Bremsflüssigkeitssensor 34 (siehe FIG. 2) misst den Pegelstand im Bremsflüssigkeitsbehälter 2, in dem ein Maximalpegel 40 und ein Minimalpegel 42 definiert sind, die beide höher liegen als die Höhe der Schottwände 10, 12. Weiterhin sind eine erste 50 und eine zweite 60 Pegelstandwarnstufen definiert, bei denen der Bremsflüssigkeitssensor 34 eine Warnung ausgibt. Beide Stufen 50, 60 liegen unter dem Minimalpegel 42. Ein Pfeil 80 zeigt in Richtung von Ereignissen, die im Falle einer Leckage auftreten.

Eine erste Darstellung 70 des Behälters 2 zeigt einen Ausgangszustand an (keine Leckage). Der Füllstandpegel liegt zwischen Minimalpegel 42 und Maximalpegel 40. Das Bremssystem 30 wird in einer Normalbetriebsart mit Fremdkraft betrieben.

In der Darstellung 72 liegt der Bremsflüssigkeitspegel unter der ersten Warnstufe 50. Sofern dieser Zustand für länger als eine vorgegebene Zeitspanne, bevorzugt 10 s, vorliegt, wird dem Fahrer eine Warnung ausgegeben. Das Bremssystem bleibt im By-Wire-Modus, d. h. in allen Radbremsen wird weiterhin aktiv mittels einer Druckbereitstellungseinrichtung Druck aufgebaut. Auch in diesem Zustand wird das Bremssystem 30 in einer Normalbetriebsart mit Fremdkraft betrieben.

In der Darstellung 74 ist der Pegelstand in den Kammern 4 (Druckbereitstellungseinrichtung) und 6 (Sekundärkreis) weiter abgesunken. Bevorzugt wird das Bremssystem 30 in einer Normalbetriebsart mit Fremdkraft betrieben, der Fahrer wird mit einer Warnlampe gewarnt.

In der Darstellung 76 ist das Bremsflüssigkeitsniveau in der Kammer 4 unter die zweite Pegelstandwarnstufe 60 gefallen. Das System degradiert auf HFL(+FSI) (hydraulic fallback with integrated parking brake), also Bremsunterstützung mit EPB (elektronischer Parkbremse).

In diesem Betriebsmodus werden alle vier Radbremsen betrieben, wobei dies von der Größe der Leckage abhängt.

In der Darstellung 78 ist die Kammer 6 des Sekundärkreises mittlerweile leer, so dass mit den Radbremsen des Sekundärkreises kein Bremsmoment mehr aufgebaut werden kann. Der HFL-Modus Modus ist noch effektiv in dem Primärkreis (+FSI), also mit zwei Radbremsen.

In FIG. 2 ist eine bekannte Bremsanlage 100 dargestellt. Die Bremsanlage 100 umfasst einen Hauptbremszylinder 84 mit zwei Druckräumen 86, 88. Der Hauptbremszylinder 84 wird über ein Bremspedal 90 vom Fahrer des Kraftfahrzeugs betätigt. Der Hauptbremszylinder 84 ist an einen Druckmittelvorratsbehälter bzw. Bremsflüssigkeitsbehälter 2 angeschlossen und wird aus diesem mit Druckmittel versorgt. Dabei verfügt jeder der Druckräume 86, 88 über einen eigenen Anschluss an den Druckmittelvorratsbehälter 2.

Der erste Druckraum 86 des Hauptbremszylinders 84 ist über ein erstes Trennventil 106 mit einem ersten Bremskreis I verbunden, an welchen die erste und die zweite Radbremse 110, 112 angeschlossen sind. Das erste Trennventil 106 ist beispielsgemäß stromlos offen ausgeführt. Zweckmäßigerweise sind die erste und zweite Radbremse 110, 112 dabei über je ein Einlassventil 114, 116 angeschlossen.

Der zweite Druckraum 88 des Hauptbremszylinders 84 ist über ein zweites Trennventil 120 mit einem zweiten Bremskreis II verbunden, an welchen die dritte und die vierten Radbremse 120, 124 angeschlossen sind. Das zweite Trennventil 120 ist beispielsgemäß stromlos offen ausgeführt. Zweckmäßigerweise sind die dritte und vierte Radbremse 122, 124 dabei über je ein Einlassventil 130, 132 angeschlossen.

Die Bremsanlage 100 umfasst auch eine Druckbereitstellungseinrichtung 20. Die Druckbereitstellungseinrichtung 20 umfasst beispielsgemäß einen Motor 136, mittels dessen ein Kolben 140 in einem hydraulischen Druckbereitstellungseinrichtungs-Druckraum 142 (DBE-Druckraum) verschoben werden kann, wodurch ein Druck aufgebaut werden kann. Die Druckbereitstellungseinrichtung 20 ist über eine Verbindung 150 an den Druckmittelvorratsbehälter 2 angeschlossen und wird aus diesem mit Druckmittel versorgt.

Die Druckbereitstellungseinrichtung 20 ist beispielsgemäß über ein erstes Zuschaltventil 154 mit der ersten und zweiten Radbremse 110, 112 trennbar verbunden und über ein zweites Zuschaltventil 156 mit der dritten und der vierten Radbremse 122, 124 trennbar verbunden.

Die Bremsanlage 100 kann beispielsgemäß in einem Normalbetrieb betrieben werden, der einem sog. "By-Wire"-Betrieb entspricht. Im Normalbetrieb werden das erste und das zweite Trennventil 106, 120 geschlossen, so dass der Hauptbremszylinder 84 von den Radbremsen 110, 112, 122, 124 entkoppelt ist. Die Zuschaltventile 154, 156 werden geöffnet, und Druck in den Radbremsen wird durch die Druckbereitstellungseinrichtung 20 erzeugt.

Ein Druckaufbau durch die Druckbereitstellungseinrichtung 20 kann im Normalbetrieb auch unabhängig von einer Betätigung des Bremspedals 90 durchgeführt werden. Radbremsdruck kann durch Öffnen von Auslassventilen 160, 162, 164, 166, über welche die Radbremsen 110, 112, 122, 124 mit einer gemeinsamen Rücklaufleitung 170 und darüber mit dem Druckmittelvorratsbehälter 2 verbunden sind, aus den Radbremsen 110, 112, 122, 124 abgebaut werden. Alternativ können getrennte Rücklaufleitungen vorgesehen sein (nicht dargestellt), wobei vorteilhafterweise die erste und zweite Radbremse 110, 112 an eine erste Rücklaufleitung angeschlossen sind und die dritte und vierte Radbremse 122, 124 an eine zweite Rücklaufleitung angeschlossen sind. Die Rücklaufleitungen sind an unterschiedliche Kammern des Bremsflüssigkeitsbehälters 2 angeschlossen.

Die Einlassventile 114, 116, 130, 132 sind einzeln schaltbar zum Einstellen unterschiedlicher Drücke in den Radbremsen. Es können mit der Bremsanlage 100 an sich bekannte Brems-Regelfunktionen durchgeführt werden (bspw. EBV, ABS, ASR, ESC, ACC, etc.).

Die Bremsanlage 100 kann in einem ersten Rückfallbetriebsmodus betrieben werden. Hierzu wird beispielsgemäß die Druckbereitstellungseinrichtung 20 von den Radbremsen 110, 112, 122, 124 getrennt, indem die Zuschaltventile 154, 156 geschlossen werden. Der Hauptbremszylinder 84 wird mit den Radbremsen 110, 112, 122, 124 hydraulisch verbunden, indem die Trennventile 106, 120 geöffnet werden, so dass Bremsdruck in den Radbremsen 110, 112, 122, 124 durch den Hauptbremszylinder 84 bereitgestellt wird. Die Druckbereitstellungseinrichtung 20 wird hierbei nicht zum Druckaufbau verwendet.

Weiter kann die Bremsanlage 100 auch in einem zweiten Rückfallbetriebsmodus betrieben werden, in dem beispielsgemäß der Hauptbremszylinder 84 von den Radbremsen 110, 112, 122, 124 durch Schließen der Trennventile 106 oder 120 getrennt wird und die Druckbereitstellungseinrichtung 20 mit zumindest einem Teil der Radbremsen verbunden wird, indem das erste Zuschaltventil 154 und/oder das zweite Zuschaltventil 156 geöffnet wird. Bremsdruck zur Betätigung des Teils der Radbremsen wird durch die Druckbereitstellungseinrichtung 20 bereitgestellt.

Dabei wird Bremsdruck in der ersten und zweiten Radbremse 110, 112 durch die Druckbereitstellungseinrichtung 20 bereitgestellt, indem das erste Zuschaltventil 154 geöffnet wird, oder Bremsdruck in der dritten und vierten Radbremse 122, 124 durch die Druckbereitstellungseinrichtung 20 bereitgestellt, indem das zweite Zuschaltventil 156 geöffnet wird, oder Druck in allen vier Radbremsen bereitgestellt, indem sowohl das erste als auch das zweite Zuschaltventil 154, 156 geöffnet werden. Gleichzeitig wird jeweils das äquivalente Trennventil geschlossen.

Je nach Ausführung der Zuschaltventile kann es vorteilhaft sein, mit einem Zuschaltventil zugleich die jeweils zugehörigen Einlassventile zu schließen. Vorteilhaft ist das insbesondere dann, wenn ein Druck in der Druckbereitstellungseinrichtung 20 öffnend auf die Zuschaltventile wirkt.

Die erste und zweite Radbremse 110, 112 sind beispielsgemäß an unterschiedlichen Fahrzeugseiten angeordnet, vorteilhafterweise auf einer Diagonalen. Dementsprechend sind die dritte und vierte Radbremse 122, 124 auch auf unterschiedlichen Fahrzeugseiten angeordnet. Beispielsweise handelt es sich bei der dritten Radbremse 122 um die vordere rechte Radbremse (FR), bei der vierten Radbremse 124 um die hintere linke (RL) Radbremse, bei der ersten Radbremse 110 um die vordere linke Radbremse (FL), und bei der zweiten Radbremse 112 um die hintere rechte Radbremse (RR). Andere Anordnungen sind ebenfalls möglich.

Im ersten und im zweiten Rückfallbetriebsmodus werden beispielsgemäß die Auslassventile 160, 162, 164, 166 der Radbremsen 110, 112, 122, 124 geschlossen gehalten, so dass ein Verschieben von Druckmittel zwischen den Kammern des Druckmittelvorratsbehälters 2 und somit zwischen den Bremskreisen I, II unterbunden wird. Regelfunktionen, welche ein Öffnen der Auslassventile 160, 162, 164, 166 veranlassen, werden beispielsgemäß abgeschaltet. Sind getrennte Rücklaufleitungen vorgesehen, so können Regelfunktionen, welche ein Öffnen der Auslassventile erfordern, teilweise angeschaltet bleiben, wenn durch sie kein Verschieben von Druckmittel zwischen den Kammern des Druckmittelvorratsbehälters 2 verursacht wird.

Weil dem Fahrer ein Lösen und Nachtreten nicht zugemutet werden soll, werden allerdings bevorzugt im ersten Rückfallbetriebsmodus nur solche Regelfunktionen angeschaltet bleiben, durch die nur ein kleiner Teil des Druckmittels im Hauptbremszylinder 84 verbraucht wird, im Wesentlichen also die elektronische Bremskraftverteilung EBV.

Die Bremsanlage 100 weist in bekannter Art einen Simulator 180 auf, der im Normalbetrieb (Brake-by-Wire) dem Fahrer ein gewohntes Pedalgefühl liefert.

Der Bremsflüssigkeitsbehälter 2 umfasst, wie in FIG. 1 dargestellt, die erste Kammer 4, die hydraulisch der Druckbereitstellungseinrichtung 20 zugeordnet ist, die zweite Kammer 6, die hydraulisch der zweiten Kammer 88 (Sekundärkammer) des Hauptbremszylinder 84 zugeordnet ist und die dritte Kammer 8, die hydraulisch der ersten Kammer 86 (Primärkammer) des Hauptbremszylinders 84 zugeordnet ist. Die Bremsanlage 100 umfasst weiterhin den zweistufigen Bremsflüssigkeitssensor 34.

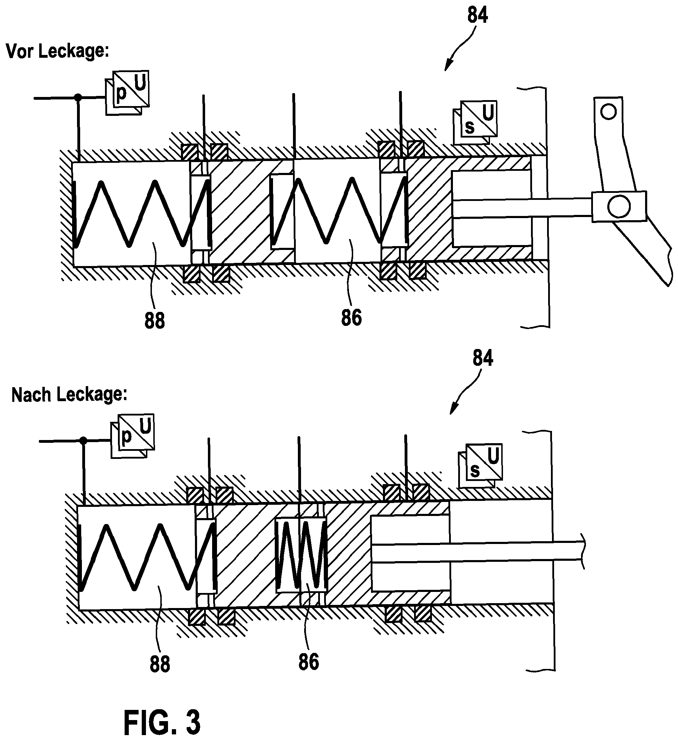

In FIG. 3 ist der als Tandemhauptbremszylinder (TMC) ausgebildete Hauptbremszylinder 84 beispielsgemäß in der oberen Darstellung in einem Zustand vor einer Leckage dargestellt. Beide Kammern 86, 88 sind mit Bremsflüssigkeit gefüllt, so dass in einer Rückfallebene, in der die Kammern 86, 88 des Hauptbremszylinders 84 mit den Bremskreisen I, II verbunden werden, der Fahrer durch Betätigung des Bremspedals 90 Bremsdruck in den Radbremsen von beiden Bremskreisen I, II aufbauen kann.

In der unteren Abbildung enthält die Primärkammer 86 - verursacht durch eine Leckage - keine oder nur noch eine unzureichende Menge an Bremsflüssigkeit, um bei Betätigung des Bremspedals 90 Bremsdruck in den Radbremsen des Primärkreises I aufzubauen. Die Sekundärkammer 88 ist noch mit Bremsmittel gefüllt.

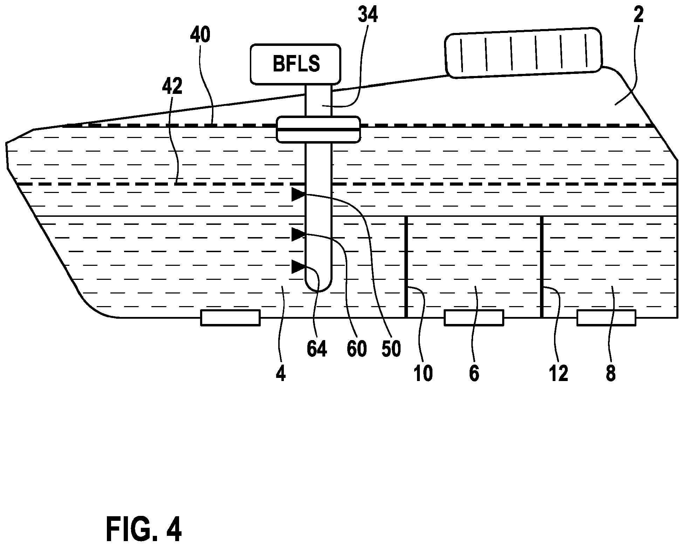

In FIG. 4 ist ein Bremsflüssigkeitsbehälter 2 zu sehen, wie er in einem erfindungsgemäßen Verfahren und einer erfindungsgemäßen Bremsanlage 100 eingesetzt wird. Wie der in den FIG. 1 und 2 dargestellte Bremsflüssigkeitsbehälter 2 weist er drei Kammern 4 (Refill Chamber), 6 (SC Chamber), 8 (PC Chamber) auf, die der Druckbereitstellungseinrichtung 20 sowie dem Sekundärkreis II und dem Primärkreis I zugeordnet sind. Auch sind ein maximaler 40 und minimaler Füllstandpegel definiert.

Im Gegensatz zu dem in den FIG. 1 und 2 dargestellten Bremsflüssigkeitsbehälter 2 ist neben einer ersten 50 (SP1) und zweiten Pegelstandwarnstufe 60 (SP2) eine dritte Pegelstandwarnstufe 64 (SP3) vorgesehen, die unterhalb der zweiten Stufe 60 liegt.

Durch die Nutzung eines drei-stufigen Bremsflüssigkeitssensors 34 und einem veränderten Degradationskonzepts wird die Degradationsstufe der einkreisigen, hydraulischen Rückfallebene ohne Systemverstärkung verhindert.

Die Warnstrategie wird folgendermaßen verändert: Bei Erreichen des ersten Schaltpunktes bzw. der ersten Pegelstandwarnstufe 50 wird der By-Wire-Betrieb beibehalten und auf einen Kreis geschaltet. Dieser Kreis kann dem physikalischen Kreis (Diagonale) entsprechen, kann aber auch einer Achse durch Schließen der Einlassventile entsprechen. Um die System-Degradation so gering wie möglich zu halten und Fahrzeug-Gierung/Querversatz durch die Verstärkung einer Diagonalen zu vermeiden, empfiehlt sich bei Erreichen des ersten Schaltpunktes die Verstärkung der Vorderachse.

Wird der zweite Schaltpunkt bzw. die zweite Pegelstandwarnstufe 60 erreicht, wird der By-Wire-Betrieb beibehalten und auf den anderen Kreis geschaltet. Bei obiger Strategie wäre es die Hinterachse, es kann aber auch die gegenüberliegende Diagonale sein.

Wird der dritte Schaltpunkt bzw. die dritte Pegelstandwarnstufe 210 erreicht, so wird der By-Wire-Betrieb beendet und der Fahrer erhält mechanischen Durchgriff durch die Umschaltung auf den TMC.

Bevorzugt werden durch geeignete Filterung über die Zeit kurzzeitige Über- oder Unterschreitungen der Warnschwelle durch die Dynamik des Fahrzeuges herausgefiltert. Diese Filterungszeit wird mit den Warnschwellen der Leckage- und Lufterkennung (VDM) in der Art und Weise abgestimmt, dass sowohl kleine Leckagen zuverlässig, als auch große Leckagen rechtzeitig erkannt werden. Dieses Konzept führt dazu, dass die unerwünschte Rückfallebene seltener erreicht wird:

Während ein Kreis, bzw. die Vorder-/Hinterachse isoliert ist, wird vorteilhafterweise in regelmäßigen Abständen für einen Druckausgleich gesorgt. Hierzu können die Auslassventile der jeweils isolierten Räder kurzzeitig geöffnet werden. Zusätzlich wird dies vorteilhafterweise nach jeder Bremsung durchgeführt, da durch die Leckagen der Einlass-Ventile ein Druckaufbau auf den isolierten Rädern durchzuführen ist.

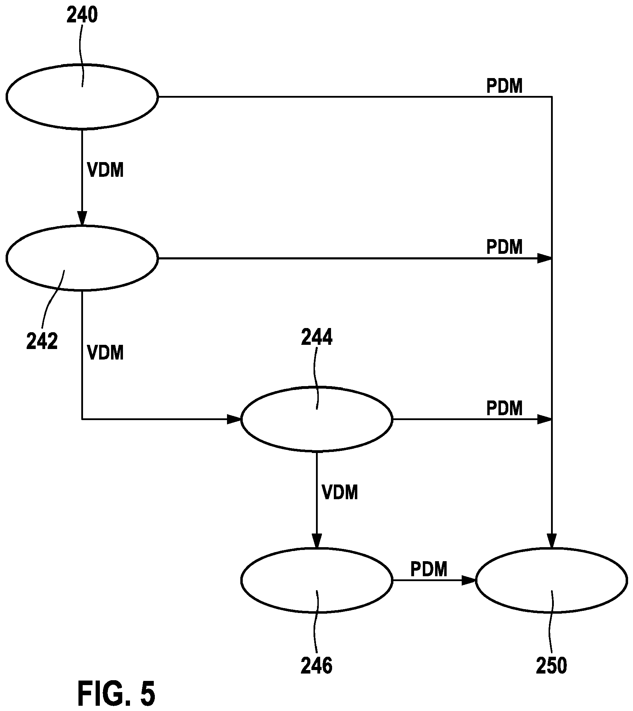

Zusätzlich wird bevorzugt eine Leckageisolierung (VDM, Leakage Isolation) genutzt, um bei großen Leckagen den Kreis zu identifizieren. Dies wird in FIG. 5 durch ein Ablaufdiagramm verdeutlicht.

In einem Block 240 wird das Fahrzeug in einem By-Wire-Modus betrieben. Durch Plausibilisierung des Weges des Linearaktors bzw. der Druckbereitstellungseinrichtung 20 zum Systemdruck kann vermutet werden, dass sich eine Leckage im System befindet. Tritt diese Vermutung ein, so werden die Hinterräder 112, 124 durch die Einlassventile 116, 132 vom Bremssystem abgetrennt. In Block 242 werden nur die Vorderradbremsen 110, 122 im Brake-by-Wire-Betrieb durch die Druckbereitstellungseinrichtung 20 mit Bremsdruck versorgt (Front-Only By-Wire).

Wird weiterhin die Leckage festgestellt, so befindet sich das Leck an der Vorderachse und es kann die Hinterachse verstärkt werden, siehe Block 244 (Rear-Only By-Wire). Wird keine Leckage festgestellt, so bleibt das System auf der Vorderachse.

Wird nach Umschalten auf die Hinterachse eine Leckage festgestellt, so befindet sich, bei Annahme eines Einzelfehlers, die Leckage im System und nicht in einer der beiden Radkreise.

Das System kann daher wieder beidkreisig by-wire geschaltet werden, siehe Block 246, bis die Drucküberwachung (PDM) zuschlägt oder der dritte Schaltpunkt bzw. die dritte Pegelwarnstufe 210 erreicht wird. In diesem Fall wird in Block 250 in die hydraulische Rückfallebene geschaltet.

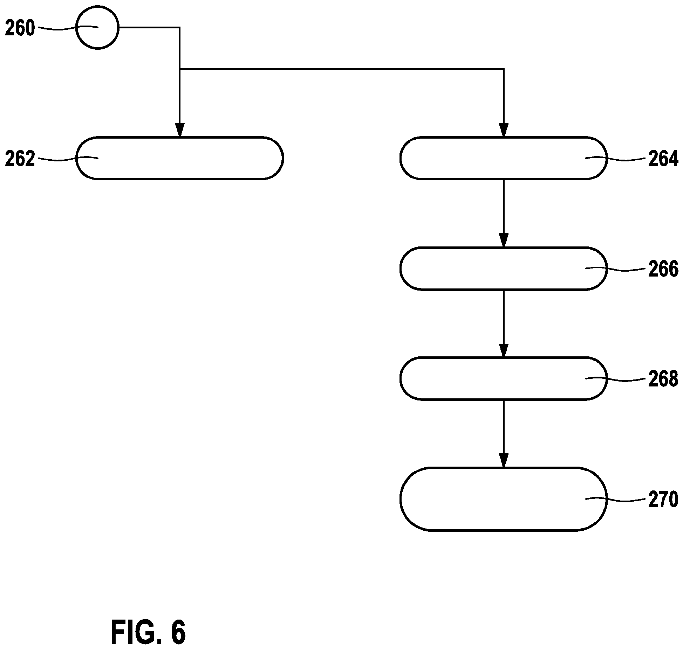

In einer weiteren bevorzugten Ausführungsform des Verfahrens sind insgesamt vier Pegelstandwarnstufen vorgesehen, siehe dazu FIG. 6. Das Verfahren beginnt in Block 260, in dem die Bremsanlage 100 im Brake-by-Wire-Modus betrieben wird. Dabei befindet sich der Pegelstand der ersten Pegelstandwarnstufe über der Schottwand des Bremsflüssigkeitsbehälters 2. In einem Block 262, der nach dem Start bedingungslos angesprungen wird, wird die erste Pegelstandwarnstufe nicht erreicht. Die Bremsanlage 100 wird weiterhin im Brake-by-Wire-Modus betrieben (Keine Degradation, Normalbetrieb). In Block 264 wird die erste Pegelstandwarnstufe erreicht. Der Fahrer wird mit einer roten Warnlampe gewarnt. Die beiden Bremskreise I, II werden voneinander separiert, um zu vermeiden, dass eine Leckage zu einem Totalverlust der hydraulischen Aufbaufähigkeit führt (Trennung der Bremskreise durch Schließen eines Zuschaltventils 154, 156). Ferner können bei Bedarf in ungebremsten Fahrsituationen Einlassventile geschlossen werden.

In Block 266 (Front verstärkt) wird die zweite Pegelstandwarnstufe erreicht. Die Bremsanlage 100 wird nun so betrieben, dass nur in den Vorderradbremsen 110, 122 aktiv mittels der Druckbereitstellungseinrichtung 20 Radbremsdruck aufgebaut wird. Dazu werden die Einlassventile 116, 132, die den Hinterradbremsen 112, 124 zugeordnet sind, geschlossen. Ferner können bei Bedarf in ungebremsten Fahrsituationen die Einlassventile 114, 130 der Vorderradbremsen 110, 122 geschlossen werden.

Der Pegelstand der zweiten Pegelstandwarnstufe kann über der Schottwand angeordnet sein. In diesem Fall werden bei einer Leckage die Vorderradbremsen 110, 122 im Brake-by-Wire-Betrieb betrieben. Wenn der Pegelstand der zweiten Pegelstandwarnstufe unterhalb der Schottwand liegt, wird bei einer Leckage im Primärkreis oder im Sekundärkreis dem Fahrer eine Warnung ausgegeben, bevorzugt durch eine rote Warnlampe.

In Block 268 (Heck verstärkt) wird die dritte Pegelstandwarnstufe erreicht. Die Bremsanlage 100 wird nun derart geschaltet, dass nur in den Hinterradbremsen 112, 124 aktiv Druck mittels der Druckbereitstellungseinrichtung 20 aufgebaut wird. Dazu werden die den Vorderradbremsen 110, 122 zugeordneten Einlassventile 114, 130 geschlossen. Ferner können bei Bedarf in ungebremsten Fahrsituationen die Einlassventile 116, 132 der Hinterradbremsen 112, 124 geschlossen werden.

Der Pegelstand der dritten Pegelstandwarnstufe liegt unterhalb der Schottwand, so dass differenziert werden kann zwischen Leckagen in Sekundärkreis / Primärkreis und dem Bremskreis mit den Vorderradbremsen 110, 122. Der Pegelstand der nullten Pegelstandwarnstufe wird so gewählt, dass jeder erlaubte Nachfüllvorgang nicht zu einer Zugabe von Luft führt.

In Block 270 wird die letzte Pegelstandwarnstufe erreicht. Die Bremsanlage 100 wird in die hydraulische Rückfallebene geschaltet. Die Zuschaltventile 154, 156 werden geschlossen, so dass die Druckbereitstellungseinrichtung 20 hydraulisch von den Radbremsen 110, 112, 122, 124 abgetrennt wird. Die Trennventile 106, 120 werden geöffnet, so dass die Kammern 86, 88 des Hauptbremszylinders 84 hydraulisch mit den Radbremsen 110, 112, 122, 124 verbunden werden. Ferner wird das Simulatorventil 168 geschlossen. Der Fahrer kann nun durch Betätigung des Bremspedals 90 Bremsdruck in den Radbremsen 110, 112, 122, 124 aufbauen.

Das Schließen von Einlassventilen 114, 116,130, 132 kann das Abfließen von Bremsflüssigkeit aus einer Radbremsen in Situationen, in denen nicht gebremst wird, reduzieren oder sogar verhindern.

Bevorzugt werden VDM (wie im Zusammenhang mit FIG. 5 diskutiert) und Isolierung der Leckage auch hier betrieben.

Das Nachfüllkonzept kann adaptiert werden, wenn die dritte Pegelstandwarnstufe erreicht wird, um eine niedrigere Positionierung der nullten Pegelstandwarnstufe wenn wenig Platz im Bremsflüssigkeitsbehälter 2 vorhanden ist.

## Patentansprüche

1. Verfahren zum Betreiben einer Bremsanlage (100) mit hydraulisch betätigbaren Radbremsen (110, 112, 122, 124), welche eine elektrisch steuerbare Druckbereitstellungseinrichtung (20), die mit den Radbremsen (110, 112, 122, 124) trennbar verbunden ist, einen mittels eines Bremspedals (90) betätigbaren Hauptbremszylinder (84), welcher mit den Radbremsen (110, 112, 122, 124) trennbar verbunden ist, und einen Bremsflüssigkeitsbehälter (2) mit einer ersten (4) und wenigstens einer zweiten Behälterkammer (6, 8), welche durch eine erste Schottwand (10) getrennt sind, umfasst, wobei die erste Behälterkammer (4) mit der Druckbereitstellungseinrichtung (20) über einen ersten Anschluss zur Flüssigkeitsentnahme verbunden ist, über den die Druckbereitstellungseinrichtung (20) mit Druckmittel versorgt wird, und die wenigstens eine zweite Behälterkammer (6, 8) mit dem Hauptbremszylinder (84) über wenigstens einen zweiten Anschluss zur Flüssigkeitsentnahme verbunden ist, über den der Hauptbremszylinder (84) mit Druckmittel versorgt wird, wobei mittels wenigstens eines Bremsflüssigkeitssensors (34) ein erster (SP 1) und ein zweiter Füllstandpegel (SP 2) in dem Bremsflüssigkeitsbehälter (2) ermittelt werden, wobei der zweite Füllstandpegel (SP 2) niedriger ist als der erste Füllstandpegel (SP 1), wobei die Bremsanlage (100) bei Erreichen des ersten Füllstandpegels (SP 1) in einem ersten Betriebsmodus betrieben wird und bei Erreichen des zweiten Füllstandpegels (SP 2) in einem zweiten Betriebsmodus betrieben wird,
**dadurch gekennzeichnet, dass** wenigstens ein weiterer Füllstandpegel (SP 3), der niedriger als der erste und zweite Füllstandpegel (SP 1, SP 2) liegt, mittels des Bremsflüssigkeitssensors (34) überwacht wird, und wobei die Bremsanlage (100) nur in eine hydraulische Rückfallebene geschaltet wird, wenn der niedrigste überwachte Füllstandpegel (SP 3) erreicht wird.

2. Verfahren nach Anspruch 1, wobei der wenigstens eine weitere Füllstandpegel (SP 3) ein dritter Füllstandpegel ist, und wobei der erste Füllstandpegel (SP 1) über einer Schottwand (10, 12) im Bremsflüssigkeitsbehälter (2) liegt, und wobei der zweite und der dritte Füllstandpegel (SP 2, SP 3) unterhalb einer Schottwand (10, 12) im Bremsflüssigkeitsbehälter (2) liegen.

3. Verfahren nach Anspruch 1, wobei als weitere Füllstandpegel ein dritter (SP 3) und ein nullter Füllstandpegel (SP 4) ermittelt werden, wobei der dritte Füllstandpegel (SP 3) niedriger liegt als er erste (SP 1) und der zweite Füllstandpegel (SP 2) und wobei der nullte Füllstandpegel (SP 4) höher liegt als der erste Füllstandpegel (SP 1).

4. Verfahren nach Anspruch 3, wobei der zweite Füllstandpegel (SP 2) über einer Schottwand (10, 12) im Bremsflüssigkeitsbehälter (2) liegt.

5. Verfahren nach Anspruch 3 oder 4, wobei bei Erreichen des nullten Füllstandpegels (SP 4) eine Warnung ausgegeben wird.

6. Verfahren nach Anspruch 5, wobei mittels eines Sensors die Hanglage des Bremsflüssigkeitsbehälters (2) ermittelt wird, und wobei die Warnung unterdrückt wird, wenn die ermittelte Hanglage größer ist als ein vorgegebener Hanglagenschwellenwert.

7. Verfahren nach einem der Ansprüche 1 bis 6, wobei in dem ersten Betriebsmodus in den Radbremsen (110, 122) einer Achse mittels der Druckbereitstellungseinrichtung (20) aktiv Radbremsdruck aufgebaut wird, und wobei in dem zweiten Betriebsmodus in den Radbremsen (112, 124) der anderen Achse mittels der Druckbereitstellungseinrichtung (20) aktiv Radbremsdruck aufgebaut wird.

8. Verfahren nach Anspruch 7, wobei in dem ersten und zweiten Betriebsmodus der Hauptbremszylinder (84) hydraulisch von den Radbremsen (110, 112, 122, 124) getrennt wird.

9. Verfahren nach Anspruch 7 oder 8, wobei in dem ersten Betriebsmodus in den Vorderradbremsen (110, 122) und im zweiten Betriebsmodus in den Hinterradbremsen (112, 124) aktiv Radbremsdruck aufgebaut wird.

10. Verfahren nach einem der vorhergehenden Ansprüche, wobei in der hydraulischen Rückfallebene die Druckbereitstellungseinrichtung (20) von den Radbremsen (110, 112, 122, 124) getrennt wird und der Hauptbremszylinder (84) mit den Radbremsen (110, 112, 122, 124) verbunden wird, so dass Bremsdruck in den Radbremsen (110, 112, 122, 124) durch den Hauptbremszylinder (84) bereitgestellt wird.

11. Verfahren nach einem der vorherigen Ansprüche, wobei der jeweilige Füllstandpegel (SP 1, SP 2, SP 3, SP 4) in der Kammer (4) des Bremsflüssigkeitsbehälters (2) gemessen wird, die hydraulisch der Druckbereitstellungseinrichtung (20) zugeordnet ist.

12. Verfahren nach einem der vorherigen Ansprüche, wobei der oberste ermittelte Füllstandpegel (SP 1) oberhalb der Schottwand (10, 12) angeordnet ist.

13. Bremsanlage (100), umfassend hydraulisch betätigbare Radbremsen (110, 112, 122, 124), wobei jeweils zwei Radbremsen (110, 112; 122, 124) einem Bremskreis (I, II) zugeordnet sind, und umfassend eine elektrisch steuerbare Druckbereitstellungseinrichtung (20), die mit den Radbremsen (110, 112, 122, 124) trennbar verbunden ist, umfassend einen mittels eines Bremspedals (90) betätigbaren Hauptbremszylinder (84), welcher mit den Radbremsen (110, 112, 122, 124) trennbar verbunden ist, und umfassend einen Bremsflüssigkeitsbehälter (2) mit einer ersten (4) und wenigstens einer zweiten Behälterkammer (6, 8), welche durch eine erste Schottwand (10) getrennt sind, wobei die erste Behälterkammer (4) mit der Druckbereitstellungseinrichtung (20) über einen ersten Anschluss zur Flüssigkeitsentnahme verbunden ist, über den die Druckbereitstellungseinrichtung (20) mit Druckmittel versorgt wird, und die wenigstens eine zweite Behälterkammer (6, 8) mit dem Hauptbremszylinder (84) über wenigstens einen zweiten Anschluss zur Flüssigkeitsentnahme verbunden ist, über den der Hauptbremszylinder (84) mit Druckmittel versorgt wird, wobei wenigstens ein Bremsflüssigkeitssensor (34) vorgesehen ist, weiterhin umfassend eine Steuer- und Regeleinheit zur Durchführung eines Verfahrens nach einem der vorherigen Ansprüche.

14. Bremsanlage (100) nach Anspruch 13, wobei der Bremsflüssigkeitsbehälter (2) drei Kammern (4, 6, 8) umfasst, von denen die erste Kammer (4) hydraulisch der Druckbereitstellungseinrichtung (20) zugeordnet ist und wobei die anderen zwei Kammern (6, 8) jeweils hydraulisch dem zweiten Bremskreis (II) und dem ersten Bremskreis (I) zugeordnet sind, wobei benachbarte Kammern (4, 6; 6, 8) durch Schottwände (10, 12) voneinander getrennt sind, und wobei die Schottwände (10, 12) die gleiche Höhe aufweisen.

## Claims

1. Method for operating a braking system (100) having hydraulically actuatable wheel brakes (110, 112, 122, 124), which system comprises an electrically controllable pressure supply device (20), which is separably connected to the wheel brakes (110, 112, 122, 124), a master brake cylinder (84), which can be actuated by means of a brake pedal (90) and which is separably connected to the wheel brakes (110, 112, 122, 124), and a brake fluid reservoir (2) having a first (4) and at least one second reservoir chamber (6, 8), which are separated by a first partition wall (10), wherein the first reservoir chamber (4) is connected to the pressure supply device (20) via a first port for fluid removal, via which the pressure supply device (20) is supplied with pressure medium, and the at least one second reservoir chamber (6, 8) is connected to the master brake cylinder (84) via at least one second port for fluid removal, via which the master brake cylinder (84) is supplied with pressure medium, wherein, by means of at least one brake fluid sensor (34), a first (SP 1) and a second filling level (SP 2) in the brake fluid reservoir (2) are determined, wherein the second filling level (SP 2) is lower than the first filling level (SP 1), wherein the braking system (100) is operated in a first operating mode when the first filling level (SP 1) is reached and is operated in a second operating mode when the second filling level (SP 2) is reached,
**characterized in that** at least one additional filling level (SP 3), which is lower than the first and second filling levels (SP 1, SP 2), is monitored by means of the brake fluid sensor (34), and wherein the braking system (100) is switched to a hydraulic fallback level only if the lowest monitored filling level (SP 3) is reached.

2. Method according to Claim 1, wherein the at least one additional filling level (SP 3) is a third filling level, and wherein the first filling level (SP1) is above a partition wall (10, 12) in the brake fluid reservoir (2), and wherein the second and third filling levels (SP 2, SP 3) are below a partition wall (10, 12) in the brake fluid reservoir (2).

3. Method according to Claim 1, wherein a third (SP 3) and a zero filling level (SP 4) are determined as additional filling levels, wherein the third filling level (SP 3) is lower than the first (SP 1) and second filling levels (SP 2), and wherein the zero filling level (SP 4) is higher than the first filling level (SP 1).

4. Method according to Claim 3, wherein the second filling level (SP 2) is above a partition wall (10, 12) in the brake fluid reservoir (2).

5. Method according to Claim 3 or 4, wherein a warning is emitted when the zero filling level (SP 4) is reached.

6. Method according to Claim 5, wherein the slope of the brake fluid reservoir (2) is determined by means of a sensor, and wherein the warning is suppressed if the slope determined is greater than a predetermined slope threshold.

7. Method according to any of Claims 1 to 6, wherein wheel brake pressure is actively built up in the wheel brakes (110, 122) on one axle by means of the pressure supply device (20) in the first operating mode, and wherein wheel brake pressure is actively built up in the wheel brakes (112, 124) on the other axle by means of the pressure supply device (20) in the second operating mode.

8. Method according to Claim 7, wherein the master brake cylinder (84) is separated hydraulically from the wheel brakes (110, 112, 122, 124) in the first and second operating modes.

9. Method according to Claim 7 or 8, wherein wheel brake pressure is actively built up in the front wheel brakes (110, 122) in the first operating mode, and wheel brake pressure is actively built up in the rear wheel brakes (112, 124) in the second operating mode.

10. Method according to any of the preceding claims, wherein, at the hydraulic fallback level, the pressure supply device (20) is separated from the wheel brakes (110, 112, 122, 124) and the master brake cylinder (84) is connected to the wheel brakes (110, 112, 122, 124), with the result that brake pressure in the wheel brakes (110, 112, 122, 124) is provided by the master brake cylinder (84).

11. Method according to any of the preceding claims, wherein the respective filling level (SP 1, SP 2, SP 3, SP 4) in the chamber (4) of the brake fluid reservoir (2) which is associated hydraulically with the pressure supply device (20) is measured.

12. Method according to any of the preceding claims, wherein the highest filling level (SP 1) determined is above the partition wall (10, 12).

13. Braking system (100) comprising hydraulically actuatable wheel brakes (110, 112, 122, 124), wherein two wheel brakes (110, 112; 122, 124) are each assigned to a respective brake circuit (I, II), and comprising an electrically controllable pressure supply device (20), which is separably connected to the wheel brakes (110, 112, 122, 124), comprising a master brake cylinder (84), which can be actuated by means of a brake pedal (90) and which is separably connected to the wheel brakes (110, 112, 122, 124), and comprising a brake fluid reservoir (2) having a first (4) and at least one second reservoir chamber (6, 8), which are separated by a first partition wall (10), wherein the first reservoir chamber (4) is connected to the pressure supply device (20) via a first port for fluid removal, via which the pressure supply device (20) is supplied with pressure medium, and the at least one second reservoir chamber (6, 8) is connected to the master brake cylinder (84) via at least one second port for fluid removal, via which the master brake cylinder (84) is supplied with pressure medium, wherein at least one brake fluid sensor (34) is provided, further comprising an open-loop and closed-loop control unit for carrying out a method according to any of the preceding claims.

14. Braking system (100) according to Claim 13, wherein the brake fluid reservoir (2) comprises three chambers (4, 6, 8), of which the first chamber (4) is associated hydraulically with the pressure supply device (20), and wherein the other two chambers (6, 8) are each associated hydraulically with the second brake circuit (II) and the first brake circuit (I), wherein adjacent chambers (4, 6; 6, 8) are separated from one another by partition walls (10, 12), and wherein the partition walls (10, 12) are of the same height.

## Revendications

1. Procédé pour faire fonctionner un système de freinage (100) comprenant des freins de roue (110, 112, 122, 124) actionnables hydrauliquement, qui comprend un dispositif de fourniture de pression (20) à commande électrique, qui est relié de manière séparable aux freins de roue (110, 112, 122, 124), un maître-cylindre de frein (84) actionnable au moyen d'une pédale de frein (90), qui est relié de manière séparable aux freins de roue (110, 112, 122, 124), et un réservoir de liquide de freinage (2) avec une première (4) et au moins une deuxième chambre de réservoir (6, 8) qui sont séparées par une première cloison (10), dans lequel la première chambre de réservoir (4) est reliée au dispositif de fourniture de pression (20) par l'intermédiaire d'un premier raccord pour le prélèvement de liquide, par l'intermédiaire duquel le dispositif de fourniture de pression (20) est alimenté en fluide sous pression, et l'au moins une deuxième chambre de réservoir (6, 8) est reliée au maître-cylindre de frein (84) par l'intermédiaire d'au moins un deuxième raccord pour le prélèvement de liquide, par l'intermédiaire duquel le maître-cylindre de frein (84) est alimenté en fluide sous pression, dans lequel un premier (SP 1) et un deuxième (SP 2) niveau de remplissage dans le réservoir de liquide de freinage (2) sont déterminés au moyen d'au moins un capteur de liquide de freinage (34), dans lequel le deuxième niveau de remplissage (SP 2) est inférieur au premier niveau de remplissage (SP 1), dans lequel le système de freinage (100) fonctionne dans un premier mode de fonctionnement lorsque le premier niveau de remplissage (SP 1) est atteint et fonctionne dans un deuxième mode de fonctionnement lorsque le deuxième niveau de remplissage (SP 2) est atteint, **caractérisé en ce qu'au** moins un autre niveau de remplissage (SP 3), qui est situé plus bas que les premier et deuxième niveaux de remplissage (SP 1, SP 2), est surveillé au moyen du capteur de liquide de freinage (34), et dans lequel le système de freinage (100) n'est commuté dans un plan de repli hydraulique que lorsque le niveau de remplissage surveillé le plus bas (SP 3) est atteint.

2. Procédé selon la revendication 1, dans lequel l'au moins un autre niveau de remplissage (SP 3) est un troisième niveau de remplissage, et dans lequel le premier niveau de remplissage (SP 1) est situé au-dessus d'une cloison (10, 12) dans le réservoir de liquide de freinage (2), et dans lequel les deuxième et troisième niveaux de remplissage (SP 2, SP 3) sont situés en dessous d'une cloison (10, 12) dans le réservoir de liquide de freinage (2).

3. Procédé selon la revendication 1, dans lequel un troisième niveau de remplissage (SP 3) et un niveau de remplissage zéro (SP 4) sont déterminés en tant qu'autres niveaux de remplissage, dans lequel le troisième niveau de remplissage (SP 3) est situé plus bas que le premier niveau de remplissage (SP 1) et le deuxième niveau de remplissage (SP 2) et dans lequel le niveau de remplissage zéro (SP 4) est situé plus haut que le premier niveau de remplissage (SP 1).

4. Procédé selon la revendication 3, dans lequel le deuxième niveau de remplissage (SP 2) est situé au-dessus d'une cloison (10, 12) dans le réservoir de liquide de freinage (2).

5. Procédé selon la revendication 3 ou 4, dans lequel un avertissement est émis lorsque le niveau de remplissage zéro (SP 4) est atteint.

6. Procédé selon la revendication 5, dans lequel la pente du réservoir de liquide de freinage (2) est déterminée au moyen d'un capteur, et dans lequel l'avertissement est supprimé si la pente déterminée est supérieure à une valeur seuil de pente prédéterminée.

7. Procédé selon l'une quelconque des revendications 1 à 6, dans lequel, dans le premier mode de fonctionnement, une pression de freinage de roue est activement établie dans les freins de roue (110, 122) d'un essieu au moyen du dispositif de fourniture de pression (20), et dans lequel, dans le deuxième mode de fonctionnement, une pression de freinage de roue est activement établie dans les freins de roue (112, 124) de l'autre essieu au moyen du dispositif de fourniture de pression (20).

8. Procédé selon la revendication 7, dans lequel, dans le premier et le deuxième mode de fonctionnement, le maître-cylindre de frein (84) est séparé hydrauliquement des freins de roue (110, 112, 122, 124).

9. Procédé selon la revendication 7 ou 8, dans lequel une pression de freinage de roue est activement établie dans les freins de roue avant (110, 122) dans le premier mode de fonctionnement et dans les freins de roue arrière (112, 124) dans le deuxième mode de fonctionnement.

10. Procédé selon l'une quelconque des revendications précédentes, dans lequel, dans le plan de repli hydraulique, le dispositif de fourniture de pression (20) est séparé des freins de roue (110, 112, 122, 124) et le maître-cylindre de frein (84) est relié aux freins de roue (110, 112, 122, 124), de telle sorte que la pression de freinage est fournie dans les freins de roue (110, 112, 122, 124) par le maître-cylindre de frein (84).

11. Procédé selon l'une quelconque des revendications précédentes, dans lequel le niveau de remplissage respectif (SP 1, SP 2, SP 3, SP 4) est mesuré dans la chambre (4) du réservoir de liquide de freinage (2) qui est associée hydrauliquement au dispositif de fourniture de pression (20).

12. Procédé selon l'une quelconque des revendications précédentes, dans lequel le niveau de remplissage le plus élevé déterminé (SP 1) est agencé au-dessus de la cloison (10, 12).

13. Système de freinage (100), comprenant des freins de roue (110, 112, 122, 124) actionnables hydrauliquement, dans lequel deux freins de roue (110, 112, 122, 124) sont respectivement associés à un circuit de freinage (I, II), et comprenant un dispositif de fourniture de pression (20) à commande électrique, qui est relié de manière séparable aux freins de roue (110, 112, 122, 124), comprenant un maître-cylindre de frein (84) actionnable au moyen d'une pédale de frein (90), qui est relié de manière séparable aux freins de roue (110, 112, 122, 124), et comprenant un réservoir de liquide de freinage (2) avec une première (4) et au moins une deuxième (6, 8) chambre de réservoir qui sont séparées par une première cloison (10), dans lequel la première chambre de réservoir (4) est reliée au dispositif de fourniture de pression (20) par l'intermédiaire d'un premier raccord pour le prélèvement de liquide, par l'intermédiaire duquel le dispositif de fourniture de pression (20) est alimenté en fluide sous pression, et l'au moins une deuxième chambre de réservoir (6, 8) est reliée au maître-cylindre de frein (84) par l'intermédiaire d'au moins un deuxième raccord pour le prélèvement de liquide, par l'intermédiaire duquel le maître-cylindre de frein (84) est alimenté en fluide sous pression, dans lequel au moins un capteur de liquide de freinage (34) est prévu, comprenant en outre une unité de commande et de régulation pour la mise en oeuvre d'un procédé selon l'une quelconque des revendications précédentes.

14. Système de freinage (100) selon la revendication 13, dans lequel le réservoir de liquide de freinage (2) comprend trois chambres (4, 6, 8), dont la première chambre (4) est associée hydrauliquement au dispositif de fourniture de pression (20) et dans lequel les deux autres chambres (6, 8) sont associées hydrauliquement respectivement au deuxième circuit de freinage (II) et au premier circuit de freinage (I), dans lequel des chambres voisines (4, 6 ; 6, 8) sont séparées l'une de l'autre par des cloisons (10, 12), et dans lequel les cloisons (10, 12) présentent la même hauteur.
